(19) Europäisches Patentamt
European Patent Office
Office européen des brevets

(11) EP 2 536 810 B1

(12) **FASCICULE DE BREVET EUROPEEN**

(45) Date de publication et mention de la délivrance du brevet:
**07.09.2016 Bulletin 2016/36**

(21) Numéro de dépôt: **10715917.0**

(22) Date de dépôt: **19.02.2010**

(51) Int Cl.:
***C10G 1/10*** (2006.01) ***C08J 11/18*** (2006.01)
***C08J 11/16*** (2006.01) ***C08J 11/22*** (2006.01)
***C08L 17/00*** (2006.01) ***C08L 21/00*** (2006.01)
***C08F 4/80*** (2006.01) ***C08C 19/08*** (2006.01)
***C08F 2/38*** (2006.01) ***C10G 50/00*** (2006.01)
***C08L 19/00*** (2006.01)

(86) Numéro de dépôt international:
**PCT/FR2010/050292**

(87) Numéro de publication internationale:
**WO 2011/101551 (25.08.2011 Gazette 2011/34)**

# (54) PROCEDE DE PREPARATION D'OLIGOMERES TELECHELIQUES A PARTIR DE DECHETS PNEUMATIQUES

VERFAHREN ZUR HERSTELLUNG VON TELECHELEN OLIGOMEREN AUS ALTREIFEN

METHOD FOR PREPARING TELECHELIC OLIGOMERS FROM TIRE WASTE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**26.12.2012 Bulletin 2012/52**

(73) Titulaires:
- **Centre National de la Recherche Scientifique 75016 Paris (FR)**
- **Université du Maine 72000 Le Mans (FR)**

(72) Inventeurs:
- **PILARD, Jean-François F-35320 Pance (FR)**
- **CAMPISTRON, Irène F-72000 Le Mans (FR)**
- **SADAKA, Faten F-72000 Le Mans (FR)**
- **LAGUERRE, Albert F-72000 Le Mans (FR)**

(74) Mandataire: **Icosa**
**83 avenue Denfert-Rochereau**
**75014 Paris (FR)**

(56) Documents cités:
**DD-A1- 146 053 US-A- 3 857 825**
**US-A- 4 305 850**

- **SANDRINE GILLIER-RITOIT, DANIELE REYX, IRENE CAMPISTRON, ALBERT LAGUERRE, RAJ PAL SINGH: "Telechelic cis-1,4-Oligoisoprenes through the Selective Oxidolysis of Epoxidized Monomer Units and Polyisoprenic Monomer Units in cis-1,4-Polyisoprenes" JOURNAL OF APPLIED POLYMER SCIENCE, vol. 87, no. 1, 31 octobre 2002 (2002-10-31), pages 42-46, XP002595172 ISSN: 1097-4628 DOI: 10.1002/app.11661**
- **SHAILENDRA SINGH SOLANKY, IRÈNE CAMPISTRON, ALBERT LAGUERRE, JEAN-FRANÇOIS PILARD: "Metathetic Selective Degradation of Polyisoprene: Low-Molecular-Weight Telechelic Oligomer Obtained from Both Synthetic and Natural Rubber" MACROMOLECULAR CHEMISTRY AND PHYSICS, vol. 206, no. 10, 17 mai 2005 (2005-05-17) , pages 1057-1063, XP002595174 ISSN: 1521-3935 DOI: 10.1002/macp.200400416**
- **RAQUEL SANTOS MAULER, FERNANDO GUARAGNA MARTINS, DIMITRIOS SAMIOS: "Investigation on the styrene-butadiene rubber cleavage with periodic acid under the influence of ultrasonic radiation" POLYMER BULLETIN, vol. 35, no. 1-2, 1995, pages 151-156, XP002595177 ISSN: 1436-2449 DOI: 10.1007/BF00312907**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 536 810 B1

- **MAULER R S ET AL: "SONOCHEMICAL DEGRADATION OF 1,4- CIS-POLYISOPRENE USING PERIODIC ACID-SOLVENT AND TEMPERATURE EFFECT" EUROPEAN POLYMER JOURNAL, PERGAMON PRESS LTD. OXFORD, GB LNKD- DOI:10.1016/S0014-3057(96)00148-6, vol. 33, no. 3, 1 mars 1997 (1997-03-01), pages 399-402, XP004116298 ISSN: 0014-3057**
- **J. C. MARMO, K. B. WAGENER: "ADMET Depolymerization. Synthesis of Perfectly Difunctional (f = 2.0) Telechelic Polybutadiene Oligomers" MACROMOLECULES, vol. 28, no. 8, avril 1995 (1995-04), pages 2602-2606, XP002595173 DOI: 10.1021/ma00112a002**
- **KIATTANAVITH N ET AL: "Determination of carbon black filler in natural rubber vulcanizates by olefin metathesis degradation" POLYMER DEGRADATION AND STABILITY, BARKING, GB LNKD- DOI:10.1016/0141-3910(93)90052-K, vol. 41, no. 1, 1 janvier 1993 (1993-01-01), pages 1-3, XP024144688 ISSN: 0141-3910 [extrait le 1993-01-01]**
- **SELENA GUTIÉRREZ, MIKHAIL A. TLENKOPATCHEV: "DEGRADATION OF NATURAL RUBBER VIA CROSS-METATHESIS WITH FUNCTIONALIZED OLEFINS USING RUTHENIUM ALKYLIDEN CATALYSTS" SUPLEMENTO DE LA REVISTA LATINOAMERICANA DE METALURGIA Y MATERIALES, [Online] vol. S1, no. 4, 29 juillet 2009 (2009-07-29), pages 1463-1467, XP002595176 Extrait de l'Internet: URL:www.polimeros.labb.usb.ve/RLMM/home.h t ml> [extrait le 2010-08-03]**
- **J. C. BROSSE, I. CAMPISTRON, D. DEROUET, A. EL HAMDAOUI, S. HOUDAYER, D. REYX, S. RITOIT-GILLIER: "Chemical modifications of polydiene elastomers: A survey and some recent results" JOURNAL OF APPLIED POLYMER SCIENCE, vol. 78, no. 8, 14 septembre 2000 (2000-09-14), pages 1461-1477, XP002595171 ISSN: 1097-4628 DOI: 10.1002/1097-4628(20001121)78:8<1461::AID-APP20>3.0.CO;2-V**
- **DANIÈLE REYX, IRÈNE CAMPISTRON: "Controlled degradation in tailor-made macromolecules elaboration. Controlled chain-cleavages of polydienes by oxidation and by metathesis" DIE ANGEWANDTE MAKROMOLEKULARE CHEMIE, vol. 247, no. 1, 21 juin 1996 (1996-06-21) , pages 197-211, XP002595175 DOI: 10.1002/apmc.1997.052470113**

## Description

La présente invention a pour objet un procédé de recyclage de déchets contenant du caoutchouc, en particulier des déchets pneumatiques, permettant d'obtenir des oligomères téléchéliques d'intérêt de masses molaires moyennes pouvant aller de 500 à 50000 g/mol par dégradation contrôlée de chaînes polydiènes.

L'accumulation des déchets pneumatiques dans le monde, qui se compte en centaines de milliers de tonnes par an, constitue un grave problème pour l'environnement.

Depuis le début des années 70, les différents pays de l'Union Européenne ont mis en place des législations contraignantes visant à interdire la mise en décharge de ces déchets et à obliger les industries polluantes à recycler leurs déchets. L'industrie est donc fortement incitée à réduire sa production de déchets et/ou à valoriser ses déchets par réemploi ou recyclage, notamment. En France, par exemple, la loi de 15 juillet 1975, modifiée par la loi du 13 juillet 1992, pose les bases juridiques et les principes fondamentaux visant à une plus grande maîtrise des déchets. Le décret N°2002-1563 du 24 décembre 2002 concerne plus particulièrement l'élimination des déchets pneumatiques, et impose des contraintes sur la collecte et le retraitement des pneumatiques usagés.

Les déchets pneumatiques sont des matériaux extrêmement complexes comprenant, outre le matériau polymère, appelé « gomme », qui représente 43 à 47% en masse d'un pneu, des matériaux de renfort textiles (5 à 6% en masse), des tringles et carcasses en acier (16 à 27% en masse). La partie gomme en elle-même est souvent un mélange d'élastomères naturel et synthétiques (caoutchouc naturel, polyisoprène, polybutadiène, caoutchouc butyle, des copolymères tel le poly (styrène-co-butadiène), de charges (principalement le noir de carbone, qui peut représenter de l'ordre de 21% de la masse du pneu) et différents anti-oxydants en très faibles proportions.

Les principales voies actuellement connues de valorisation des pneumatiques sont la valorisation énergétique, qui utilise le pouvoir calorifique du pneumatique dégagé par sa combustion, et la valorisation matière, qui comprend la valorisation mécanique et la valorisation chimique ; la valorisation mécanique utilise le pneu usagé entier duquel on a ôté la partie métallique, ou broyé pour différentes applications, notamment dans le domaine des travaux publics ; la valorisation chimique consiste à dégrader le pneu usagé duquel on a ôté la partie métallique, par différentes techniques telles que la pyrolyse et la dévulcanisation thermique, thermomécanique ou mécano-chimique extrêmement coûteuses en énergie et conduisant à des mélanges complexes et mal définis d'hydrocarbures. Ces mélanges complexes non-homogènes de composés organiques (C5-C20), avec une proportion importante d'aromatiques peuvent être utilisés comme combustibles dans les raffineries de pétrole. [ref : R. Murillo, E. Aylon, M.V. Navarro, M. S. Callen, A. Aranda, A. M. Mastral, Fuel Process Technol., 87(2), 143-147, 2005. C. Berrueco, E. Esperanza, F.J. Mastral, J. Ceamanos, P. Garcia Bacaicoa, J. Anal. Appl. Pyrolysis, 74(1-2), 245-253, 2005].

La Demanderesse s'est intéressée aux produits de dégradation chimique des pneumatiques et autres déchets industriels contenant du caoutchouc naturel ou synthétique, dans une proportion d'au moins 10%, de préférence au moins 20% à 80%, de préférence au moins 35% à 70% en masse par rapport à la masse totale du déchet. La Demanderesse a ainsi remarqué que les dégradations de l'art antérieur étaient consommatrices d'énergie car elles traitent le déchet à haute température et à haute pression, étaient relativement onéreuses du fait du prix des réactifs mis en oeuvre, pouvaient être polluantes et finalement résultaient dans des produits d'un intérêt industriel limité.

Toutefois, la mise au point de nouvelles méthodes de dégradations se heurtaient à de nombreux problèmes techniques : les gommes des pneumatiques sont par nature réticulées au soufre ou aux peroxydes lors de la fabrication des pneus. Cette réticulation entraîne la formation de liaisons S-S entre les chaînes de polymères hydrocarbonés créant un réseau tridimensionnel entraînant un renforcement du caoutchouc (initialement visqueux), lui donnât ses propriétés d'élasticité, de résistance au froid et à la chaleur modérée et de résistance aux dissolvants. Toute action chimique sur les chaînes polymères nécessite un accès facilité des réactifs à leur cible (les doubles liaisons carbone-carbone et nécessite donc en premier lieu la rupture des ponts S-S; les réactifs habituellement mis en oeuvre pour la dégradation de polymères étaient chers, et d'une accessibilité limitée, rendant l'intérêt industriel des réactions limité ; les catalyseurs utilisés se retrouvaient souvent désactivés à cause de la variété des composants formant le déchet.

Un véritable problème technique de recyclage des pneus et autres matériaux industriels contenant du caoutchouc se posait ainsi depuis longtemps, du fait de l'hétérogénéité du matériau composant le déchet, et aussi du fait de la présence en quantité importante de charges du type noir de carbone, nécessitant une séparation, et une récupération.

Ces difficultés importantes à surmonter peuvent expliquer que les recyclages chimiques actuellement utilisés se bornent à des méthodes mises au point depuis longtemps (pyrolyse, dévulcanisation), qui étaient acceptables économiquement parlant, quand l'énergie et les matières premières issues du pétrole étaient peu chères. A présent, le prix de l'énergie rend ces techniques de moins en moins acceptables pour les industriels concernés et pour les pouvoirs publics, et il y a un véritable besoin de trouver des alternatives moins coûteuses et moins polluantes.

Par exemple, US 4, 305, 850 décrit une méthode de décomposition de caoutchouc naturel ou synthétique vulcanisé en présence de peroxydes et d'un agent de gonflement du caoutchouc, à des températures inférieures à 100°C.

Par ailleurs, la préparation d'oligomères téléchéliques par dégradation chimique, à faible température, de caoutchouc purifié, d'origine naturelle ou synthétique, a été décrite dans l'art antérieur [S. Gillier-Ritoit et al. Journal of

Applied Polymer Science, 87, 42-46, 2003 ; S. S. Solanky et al. Macromol. Chem. Phys. 206,1057-1063, 2005 ; R.S. Mauler et al. Polymer Bulletin, 35,151-156, 1995 ; R.S. Mauler et al. Eur. Polym. J., 33 (3), 399-402, 1997 ; J.C. Marmo et al. Macromolecules 28, 2602-2606, 1995]. Dans ces références, les polymères dégradés ont subi une ou plusieurs étapes de purification préalablement à leur dégradation.

L'invention propose un procédé permettant de produire une composition homogène d' oligomères téléchéliques ayant des fonctions réactives, cétones et aldéhydes, aux extrémités des chaînes oligomériques, ce qui les rend susceptibles d'être utilisés comme macromonomères capables d'être copolymérisés avec divers comonomères, par une dégradation contrôlée de déchets contenant du caoutchouc, à une température comprise entre 15 et 40° et à pression ambiante. Le procédé selon l'invention permet, par rapport aux procédés de l'art antérieur, d'économiser de l'énergie dans le retraitement du déchet, de limiter la pollution résultant de la dégradation (absence de dégagement gazeux lié à la montée en température ; absence de dénaturation de la structure chimique des chaînes polymères due également à la montée en température, et qui entraine la formation de composés aromatiques tels le benzène et le toluène reconnus comme substances CMR (cancérigène, mutagène et reprotoxique) d'être plus économique et d'ouvrir de nouveaux domaines d'applications pour ces déchets, du fait de l'intérêt industriel des oligomères obtenus.

Ainsi, le procédé de l'invention présente une solution de recyclage faiblement consommatrice en énergie, notamment si on la compare à une pyrolyse à 500°C, qui s'effectue en une seule étape (non comprise l'étape optionnelle de séparation des charges et des produits organiques volatiles), non polluante, mettant en oeuvre des réactifs peu coûteux ou eux-mêmes recyclables, cette solution permettant de produire des produits de masse et de structure bien définies pour leur réutilisation en synthèse de nouveaux matériaux.

Plus précisément, la présente invention a pour objet un procédé de fabrication d'une composition comprenant des oligomères téléchéliques , lesdits oligomères portant à leurs extrémités des fonctions réactives et ayant une structure bien définie, comme démontré par les analyses en résonnance magnétique nucléaire et par l'indice de polymolécularité, ledit procédé comprenant :

- la mise en contact d'au moins un déchet contenant du caoutchouc, allant de produits bien définis comme des déchets de production à des formulations complexes type déchets pneumatiques ;
- avec un agent de dégradation chimique choisi parmi un agent de clivage spécifique des doubles liaisons ; et un agent de transfert en présence d'un catalyseur ;
- à une température allant de 15 et 40°, de préférence de 17 à 35 °C,
- à pression ambiante.

Avantageusement, l'obtention des oligomères par le procédé de l'invention est effective avec de bons rendements en masse, allant de 80 à 100%.

Avantageusement, l'indice de polymolécularité de la composition obtenue par le procédé de l'invention est d'environ 2, ce qui (1) indique une coupure statistique le long des chaînes (2) reflète que tout le réactif a été utilisé pour les coupures de double liaisons carbone-carbone et (3) prouve qu'il n'y a pas de réactions secondaires du type par exemple formations de diols ou/et d'époxydes sans coupures de chaînes.

Les masses molaires moyennes en nombre et les indices de polymolécularité sont déterminés par SEC (Chromatographie d'Exclusion Stérique) à 35°C sur un instrument ThermoFinnigan SEC (équipé avec un auto-échantilloneur SpectraSYSTEM AS 1000, et des détecteurs Spectra SYSTEM UV2000 et SpectraSYSTEM RI150), avec des colonnes 5 mm MIXED-D gel PL (polymer laboratories) calibrées avec une série de polystyrènes standard (580-483.103 g mol-1) . Le THF (1.0 mL/min) est utilisé comme éluant. Les poids moléculaires standardisés du polystyrène sont corrigés par le facteur B Benoît comme décrit dans Busnel J.P., Polymer, 23, 139, 1982.

Suivant un mode de réalisation préféré de l'invention, le déchet est un déchet qui contient une charge, notamment mais non exclusivement un déchet pneumatique, et le procédé comprend de préférence une étape subséquente de séparation de la phase solide et de la phase liquide de la composition, dans lequel l'on récupère la phase liquide, qui contient les oligomères téléchéliques. La phase solide, qui contient le noir de carbone peut être réutilisé dans une nouvelle formulation.

La séparation peut être effectuée par toute technique connue de l'homme du métier, notamment mais non exclusivement la centrifugation.

Dans ce mode de réalisation préféré du procédé de l'invention, où le déchet est un déchet pneumatique, les oligomères téléchéliques obtenus sont des oligoisoprènes et oligobutadiènes carbonyltéléchéliques.

Suivant un mode de réalisation particulier de l'invention, le déchet de pneumatiques utilisés sont du pneu coupé, du déchiquetas, de la poudrette ou du granulat, de préférence de la poudrette ou du granulat, généralement obtenus par enlèvement de la partie métallique du pneu, descente en température et broyage de pneumatiques usagés.

Suivant un premier mode de réalisation de l'invention, l'agent de dégradation chimique est un agent de clivage spécifique des doubles liaisons, très préférentiellement l'acide périodique.

Dans ce mode de réalisation, avantageusement, la durée de la réaction est inférieure ou égale à 48 heures,

de préférence inférieure ou égale à 24h. Lorsque l'acide périodique est l'agent de dégradation chimique, il est utilisé 2 équivalents d'acide périodique par double liaison à cliver.

Dans ce premier mode de réalisation, avantageusement, les oligomères obtenus ont une masses molaires moyenne allant de 500 et 10000 g/mol, de préférence allant de 400 à 9000 g/mol, très préférentiellement allant de 900 à 700 g/mol.

Suivant un second mode de réalisation de l'invention, l'agent de dégradation chimique est un agent de transfert, utilisé en présence d'un catalyseur, de préférence l'agent de transfert est une molécule hydrocarbonée possédant une double liaison carbone-carbone disubstituée symétrique et deux fonctions acétate, ester, aminé, alcool protégé.... De préférence, l'agent de transfert est le cis-2-butène-1, 4-diacétate. Suivant un mode de réalisation préféré, le catalyseur est un catalyseur dit de « Grubbs 2ème génération ». Le catalyseur d' Hoveyda-Grubbs et de Grubbs 3ème génération peuvent également être utilisés. Dans ce mode de réalisation, de préférence, la réaction se passe à température ambiante, entre 17 et 25 °C. Le temps de réaction est de 2 à 5 heures, préférentiellement environ 3 heures. Les oligomères sont obtenus avec un rendement supérieur à 50% en masse, de préférence environ 75% en masse. La structure des oligomères est bien définie, ce qui est montré par différentes analyses dont préférentiellement la RMN. Dans ce second mode de réalisation, avantageusement, les oligomères obtenus ont une masse molaire moyenne allant de 10000 à 100000 g/mol, de préférence allant de 20000 à 900000 g/mol, très préférentiellement allant de 30000 à 70000 g/mol.

Suivant un mode de réalisation préféré, le procédé de l'invention est mis en oeuvre directement sur le lieu de production du déchet.

Au sens de la présente invention,

par « déchet », on entend tout résidu d'un processus de production de transformation ou d'utilisation, toute substance, matériau ou plus généralement tout bien ou meuble refusé, non voulu, abandonné ou que son détenteur destine à l'abandon ;

par « déchet contenant du caoutchouc », on entend tout matériau refusé, non voulu, abandonné ou que son détenteur destine à l'abandon, comprenant du caoutchouc synthétique ou naturel ; le terme « déchet contenant du caoutchouc » comprend en particulier des déchets comprenant du caoutchouc naturel, du polyisoprène synthétique, le polybutadiène, le caoutchouc butyle, le chloroprène, le poly (styrene-butadiene) ; les déchets du caoutchouc, au sens de la présente invention comprennent les déchets de caoutchouc industriel et les déchets pneumatiques ; les « déchets pneumatiques » comprennent les pneumatiques usagés, les déchets de fabrication de pneus et les déchets de rechapage, et notamment les pneus coupés, les déchiquetas, les granulats, les poudrettes ;

Par « **pneu coupé** », on entend un pneu qui a été débité en morceaux dont la taille est supérieure à 300 mm ;

Par « **déchiquetas** », on entend des pneus découpés en morceaux irréguliers de 15 à 300 mm ;

par « **granulat** », on entend les morceaux issus de pneus réduits à une granulométrie comprise entre 1 et 15 mm par processus mécanique, cryogénique ou thermique ;

par « **poudrette** », on entend une poudre formée de particules de granulométrie inférieure à 1 mm, généralement obtenue par réduction mécanique, cryogénique ou thermique ;

par « **homogène** », on entend ayant un indice de polymolécularité allant 1 de 3, de préférence 1,5 à 2,5, plus préférentiellement d'environ 2. Le terme homogène se réfère aux structures chimiques des oligomères.

Le terme « **environ** » suivi d'une valeur numérique, signifie la valeur numérique plus ou moins 10%.

Les termes « **carbonyltéléchéliques** » et « **téléchéliques** » sont employés indifféremment l'un pour l'autre dans la présente invention.

Par « **dégradation contrôlée** », on entend une réaction de dégradation permettant d'obtenir des fractions composées d'oligomères de masses molaires et de microstructures (fonctionnalités, stéréochimie) homogènes. L'indice de polymolécularité est un moyen utilisé pour qualifier la répartition des masses molaires des oligomères obtenus à l'issue de la réaction. La Résonnance magnétique nucléaire est utilisée pour vérifier la structure chimique de la composition.

Les spectres 1H and 13C NMR spectres sont enregistrés sur un spectromètre à transformée de Fourier BRUKER 400 à 400.13 et 100.62 MHz, respectivement. Les données 1H sont reportées comme suit: déplacement chimique (multiplicité: s: singulet, t: triplet, q: quadruplet et m: multiplet, intégration et attribution des pics). Les déplacements chimiques sont reportés en ppm en retour à partir de tetraméthylsilane (TMS). Les données 13C NMR sont reportées: déplacement chimique (attribution des pics).

L'invention se comprendra mieux au vu des exemples qui suivent, qui illustrent non limitativement le procédé ci-dessus décrit.

## EXEMPLES

Les échantillons des déchets pneumatiques sont fournis par l'entreprise Delta-Gom.

Les produits synthétisés sont caractérisés par RMN $^{1}H$, RMN $^{13}C$, IRTF, et la chromatographie par exclusion stérique.

À titre d'exemple non limitatif, si le déchet est un déchet pneumatique, il contient, une fois enlevées les parties métalliques, essentiellement du caoutchouc, appelé gomme, et du noir de carbone. Le nombre de doubles liaisons à cliver est estimé en calculant d'abord la masse de gomme :

$$m\ (\text{gomme}) = m\ (\text{déchet}) - m\ (\text{noir de carbone})$$

dans laquelle m est la masse (on connaît dans le déchet le pourcentage en masse de noir de carbone, ce qui permet de déterminer la masse de noir de carbone) ; le nombre de moles d'unités polyisopréniques ou d'unités polybutadiéniques (donc le nombre de doubles liaisons) est calculé selon la formule générale :

$$\text{Nombre de doubles liaisons} = m\ (\text{gomme}) / x\%M(PI) + y\%M(PB)$$

dans laquelle

m (gomme) = masse de gomme
M (PI) = masse molaire d'une unité polyisoprène (68) ;
M (PB) = masse molaire d'une unité polybutadiène (54);
x est le pourcentage d'unités polyisoprène en masse par rapport à la masse totale de la gomme,
y est le pourcentage d'unités polybutadiène en masse par rapport à la masse totale de la gomme.

Exemple 1 :

Dans un ballon à 30°C muni d'un réfrigérant, et d'un agitateur mécanique, l'acide périodique en solution dans du THF (0.47 mol/L) est ajouté goutte à goutte sur les poudrettes (0,5- 1,5 mm) ou les granulats (1mm -12mm) dans le THF (2g/50mL). La réaction est poursuivie pendant 24 h heures à 30°C. Le mélange réactionnel est ensuite centrifugé pendant 10 minutes à 10 000 rpm afin de récupérer le noir de carbone. La phase organique est ensuite filtrée sur une colonne de célite ou de $CaCO_3$, et concentrée à l'évaporateur rotatif. Le produit obtenu est séché sous vide.

Les conditions opératoires et les rendements en oligomères obtenus sont présentés dans le tableau suivant :

| Exemples | Masses de déchets pneumatiques (g) | Type des déchets pneumatiques | Masse de l'acide périodique (g) | T (°C) | t (h) | Rdt (%) |
|---|---|---|---|---|---|---|
| 1 | 2 | poudrettes | 0,47 | 30 | 24 | 82 |
| 2 | 2 | poudrettes | 0,71 | 30 | 24 | 84 |
| 3 | 2 | granulats | 0,76 | 30 | 24 | 94 |

La RMN $^1$H du produit obtenu donne :

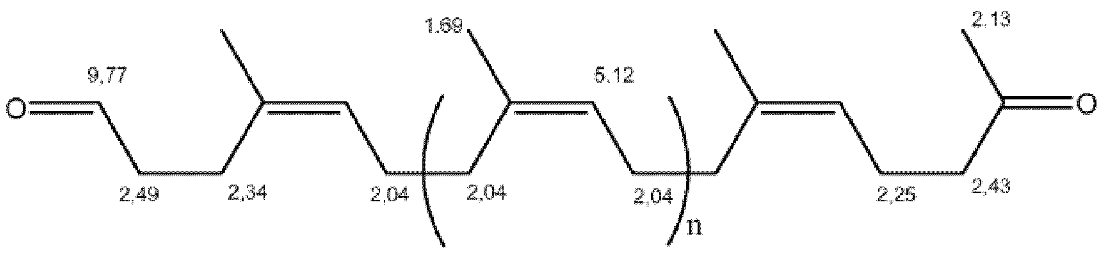

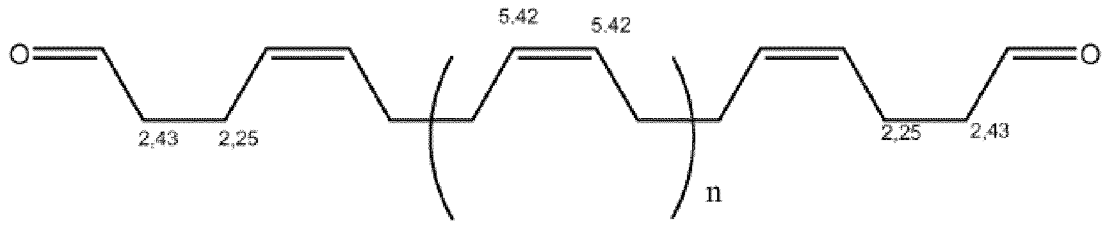

Et la chromatographie par exclusion stérique indique une masse molaire moyenne comprise entre 900 et 7000 g/mol.

Exemple 2 :

Dans un premier Schlenk on introduit les poudrettes dans le toluène ou le dichlorométhane. Dans un deuxième Schlenk on introduit le Grubbs II et l'agent de transfert de chaîne (ATC) : le cis-but-2-ène-1, 4-diacétate dans le même solvant. Le contenu du deuxième tube est transféré vers le premier Schlenk à l'aide d'une canule métallique. La réaction est mise sous agitation magnétique pendant 3 h. La réaction est arrêtée par l'ajout de l'éthanol. Le milieu réactionnel est centrifugé pendant 10 minutes à 10 000 rpm. La solution est filtrée sur célite ou $CaCO_3$. Enfin le solvant est évaporé à 1' évaporateur rotatif. Le produit obtenu est séché sous vide.

Les conditions opératoires et les rendements en oligomères obtenus sont présentés dans le tableau suivant :

| Exemples | Masses de déchets pneumatiques (g) | Solvant | Volume (ml) | Masse de Grubbs II (g) | Masse de ATC | T (°C) | t (h) | Rdt (%) |
|---|---|---|---|---|---|---|---|---|
| 1 | 0.74 | Dichlorométhane | 15 | 0.045 | 0.019 | 17 | 3 | 75 |

La RMN $^1H$ du produit obtenu donne :

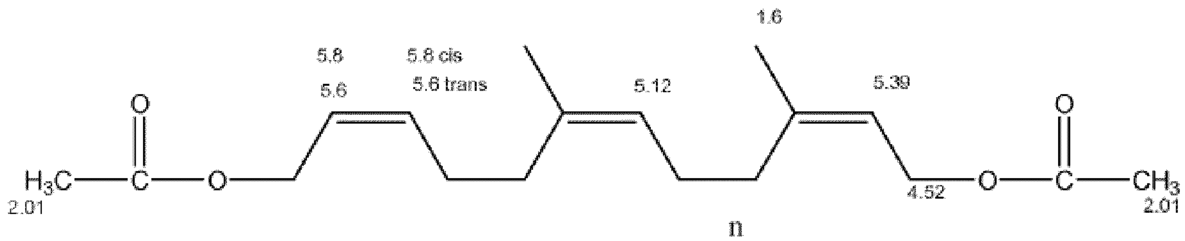

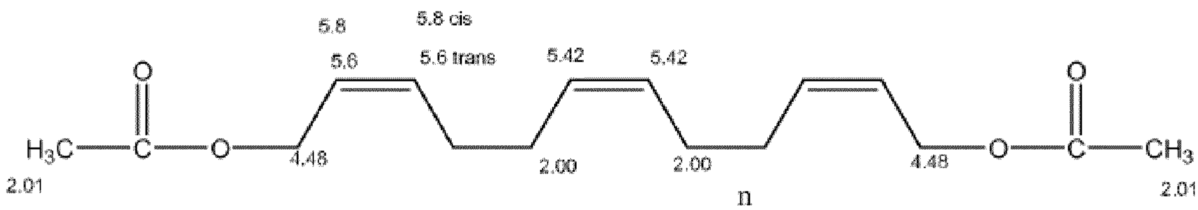

Et la chromatographie par exclusion stérique indique une masse molaire moyenne comprise entre 10 000 et 100 000 g/mol.

## Revendications

1. Procédé de recyclage de déchets pneumatiques, ledit procédé comprenant :

   - la mise en contact :

     ◦ d'au moins un déchet pneumatique comprenant du caoutchouc et une charge;

◦ avec un agent de dégradation chimique choisi parmi les agents de clivage spécifique des doubles liaisons ; et un agent de transfert en présence d'un catalyseur de Grubbs de deuxième ou de troisième génération, ou un catalyseur d'Hoveyda-Grubbs ;

à une température allant de 15 et 40°C, et à pression ambiante ; conduisant à une composition comprenant des oligomères téléchéliques portant à leurs extrémités des fonctions réactives ; et
- une étape subséquente de séparation de la phase solide et de la phase liquide de la composition, dans lequel l'on récupère la phase liquide qui contient lesdits oligomères téléchéliques.

**2.** Procédé selon la revendication **1**, **caractérisé en ce que** l'indice de polymolécularité de la composition comprenant des oligomères téléchéliques est de 2.

**3.** Procédé selon l'une quelconque des revendications **1** à **2**, dans lequel le déchet pneumatique est choisi parmi du pneu coupé, du déchiquetas, de la poudrette ou du granulat.

**4.** Procédé selon l'une quelconque des revendications **1** à **3**, dans lequel l'agent de dégradation chimique est un agent de clivage spécifique des doubles liaisons.

**5.** Procédé selon la revendication **4**, dans lequel l'agent de clivage spécifique des doubles liaisons est l'acide périodique.

**6.** Procédé selon l'une quelconque des revendications **1** à **3**, dans lequel l'agent de dégradation chimique est un agent de transfert, utilisé en présence en présence d'un catalyseur de Grubbs de deuxième ou de troisième génération, ou un catalyseur d'Hoveyda-Grubbs.

**7.** Procédé selon la revendication **6**, dans lequel l'agent de transfert est le cis-2-butène-1,4-diacétate, utilisé en présence d'un catalyseur de Grubbs de deuxième ou de troisième génération, ou un catalyseur Hoveyda-Grubbs.

## Patentansprüche

**1.** Verfahren zum Recycling von Altreifen, wobei das Verfahren Folgendes umfasst:

- das In-Kontakt-Bringen von:

◦ mindestens einem Altreifen, umfassend Kautschuk und einen Füllstoff;
◦ mit einem chemischen Abbaumittel, ausgewählt aus den spezifischen Spaltungsmitteln der Doppelbindungen; und einem Übertragungsmittel in Anwesenheit eines Grubbs-Katalysators zweiter oder dritter Generation, oder eines Hoveyda-Grubbs-Katalysators;

bei einer Temperatur, die von 15 bis 40 °C reicht, und bei einem Umgebungsdruck; das zu einer Zusammensetzung führt, die telechele Oligomere umfasst, die an ihren Enden reaktiven Funktionen tragen; und
- einen anschließenden Schritt des Trennens der festen Phase und der flüssigen Phase der Zusammensetzung, wobei die flüssige Phase, die die telechelen Oligomere enthält, wiedergewonnen wird.

**2.** Verfahren nach Anspruch **1**, **dadurch gekennzeichnet, dass** der Polymolekularitätsindex der Zusammensetzung, die telechele Oligomere umfasst, 2 ist.

**3.** Verfahren nach einem der Ansprüche **1** bis **2**, wobei der Altreifen ausgewählt ist aus geschnittenen Reifen, zerkleinerten Reifen, Mehl oder Granulat.

**4.** Verfahren nach einem der Ansprüche **1** bis **3**, wobei das chemische Abbaumittel ein spezifisches Spaltungsmittel der Doppelbindungen ist.

**5.** Verfahren nach Anspruch **4**, wobei das spezifische Spaltungsmittel der Doppelbindungen Periodsäure ist.

**6.** Verfahren nach einem der Ansprüche **1** bis **3**, wobei das chemische Abbaumittel ein Übertragungsmittel ist, das in Anwesenheit eines Grubbs-Katalysators zweiter oder dritter Generation oder eines Hoveyda-Grubbs-Katalysators verwendet wird.

7. Verfahren nach Anspruch **6**, wobei das Übertragungsmittel cis-2-Buten-1,4-Diacetat ist, das in Anwesenheit eines Grubbs-Katalysators zweiter oder dritter Generation oder eines Hoveyda-Grubbs-Katalysators verwendet wird.

## Claims

1. Method for recycling tire waste, wherein said method comprises:

   - placing in contact:

     ◦ at least one tire waste comprising rubber and a load;
     ◦ with a chemical degradation agent selected from cleavage agents that are specific for double bonds; and a transfer agent in presence of a Grubbs 2nd generation catalyst, a Grubbs 3rd generation catalyst or a Hoveyda-Grubbs catalyst;

   at a temperature ranging from 15 to 40°C, at ambient pressure; leading to a composition comprising telechelic oligomers bearing reactive functions at their ends; and
   - a subsequent step for separating the solid phase and the liquid phase of said composition, wherein the liquid phase containing the telechelic oligomers is recovered.

2. Method according to claim **1**, **characterized in that** the polymolecularity index of the composition comprising the telechelic oligomers is about **2**.

3. Method according to anyone of claim **1** or claim **2**, wherein the tire waste is selected from cut tire, shredded tire, crumb rubber or aggregate.

4. Method according to anyone of claims **1** to **3**, wherein the chemical degradation agent is a cleavage agent that is specific for double bond.

5. Method according to claim **4**, wherein the cleavage agent that is specific for double bond is periodic acid.

6. Method according to anyone of claims **1** to **3**, wherein the chemical degradation agent is a transfer agent, used in presence of a Grubbs 2nd generation catalyst, a Grubbs 3rd generation catalyst or a Hoveyda-Grubbs catalyst.

7. Method according to claim **6**, wherein the transfer agent is *cis*-2-butene-1,4-diacetate, used in presence of a Grubbs 2nd generation catalyst, a Grubbs 3rd generation catalyst or a Hoveyda-Grubbs catalyst.

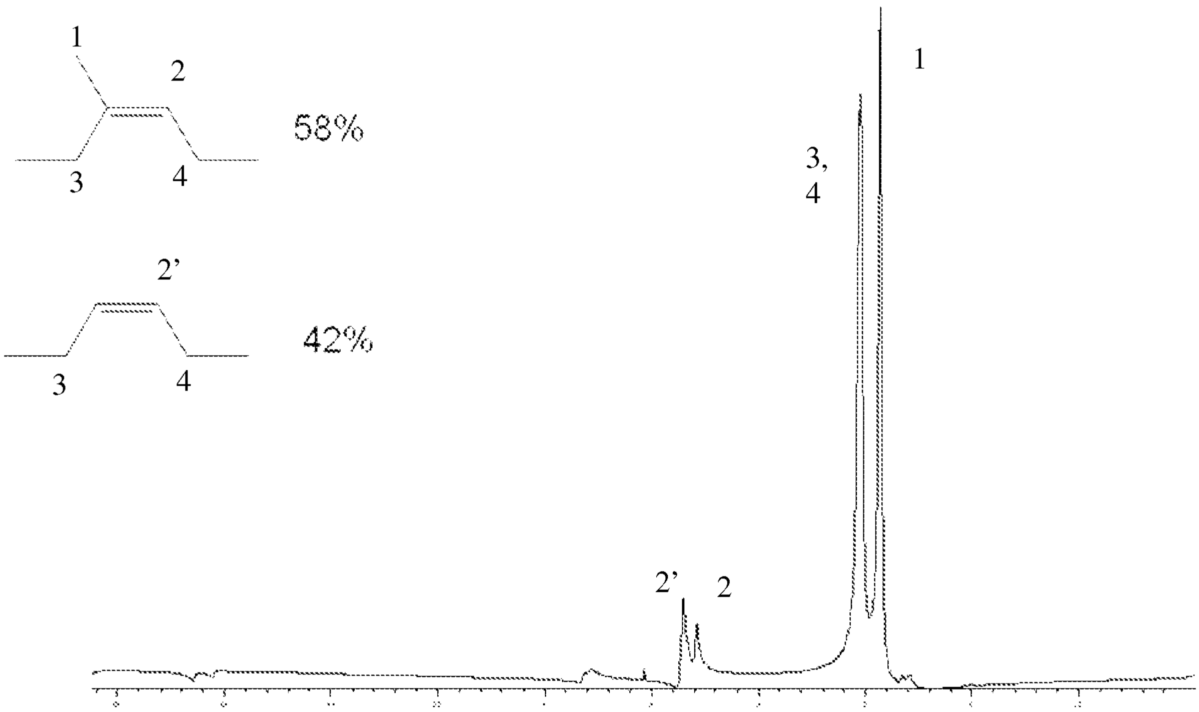


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4305850 A


### Littérature non-brevet citée dans la description


- **R. MURILLO ; E. AYLON ; M.V. NAVARRO ; M. S. CALLEN ; A. ARANDA ; A. M. MASTRAL.** *Fuel Process Technol.,* 2005, vol. 87 (2), 143-147
- **C. BERRUECO ; E. ESPERANZA ; F.J. MASTRAL ; J. CEAMANOS ; P. GARCIA BACAICOA.** *J. Anal. Appl. Pyrolysis,* 2005, vol. 74 (1-2), 245-253
- **S. GILLIER-RITOIT et al.** *Journal of Applied Polymer Science,* 2003, vol. 87, 42-46
- **S. S. SOLANKY et al.** *Macromol. Chem. Phys.,* 2005, vol. 206, 1057-1063
- **R.S. MAULER et al.** *Polymer Bulletin,* 1995, vol. 35, 151-156
- **R.S. MAULER et al.** *Eur. Polym. J.,* 1997, vol. 33 (3), 399-402
- **J.C. MARMO et al.** *Macromolecules,* 1995, vol. 28, 2602-2606
- **BUSNEL J.P.** *Polymer,* 1982, vol. 23, 139